# EUROPEAN PATENT APPLICATION

(11) **EP 1 413 562 A1**
(43) Date of publication of application: **28.04.2004**
(21) Application number: 02394102.4
(22) Date of filing: 24.10.2002
(51) Int. Cl.: C04B 28/02, C04B 18/04, C02F 11/00

(54) **Using wastewater sludge in the production of concrete**

(71) Applicant: Cronin, John Gerard, Carrigtohill, County Cork (IE)
(72) Inventor: Cronin, John Gerard, Carrigtohill, County Cork (IE)
(74) Representative: Schütte, Gearoid

(57) **Abstract**

A method of using wastewater sludge in the production of concrete comprising mixing cement, aggregate and wastewater sludge to form a concrete mix in which the additional step is carried out of mixing the wastewater sludge with an alkaline solution to achieve a wastewater sludge and alkaline solution mixture having a pH equal to or in excess of 11.5 prior to mixing with the aggregate and cement. Such a method is a simple and efficient method of producing ready usable concrete and will not require expensive sterilisation steps such as heat or radiation treatment. The wastewater sludge is disposed of in an environmentally friendly manner and will not undergo incineration or have to be dumped at sea or landfill.

## Description

### Introduction

This invention relates to a method of using wastewater sludge in the production of concrete.

Nowadays, people are looking at finding ways of recycling their refuse in a more environmentally friendly manner. One of the main sources of pollutant is wastewater sludge which covers a variety of substances ranging from raw sewage sludge containing human or animal waste and faecal matter, to waste products created by industry. Wastewater sludge comes in many forms including wastewater sludge, sludge cake and dried sludge cake. This wastewater sludge must be disposed of in as environmentally friendly a manner as possible, whilst also being disposed of in as environmentally secure a manner as possible.

Until now, the most popular methods of disposal have been to dump wastewater sludge at sea or to send the wastewater sludge to landfill. Another popular method of disposal is to subject the wastewater to a biological process whereby the liquid and solids are separated before treating the liquids to extensive biological processes for subsequent recycling. The solids that have been separated off are usually incinerated or sent to landfill. However, these methods are becoming less viable as landfill space decreases and concern over dumping at sea increases.

Another method involves the incineration of the wastewater sludge at temperatures in excess of 1200°C. This involves the construction of expensive specially dedicated plants and has further raised concerns relating to air pollutants emitted from these plants. There is also produced a by-product from the incineration that must be disposed of by way of landfill or sea dumping.

Various attempts have been made to utilise the sludge as fertilisers and the like, although this usage is limited by governmental regulation and such use only accounts for a small percentage of the wastewater sludge produced. Before the sludge may be used as a fertiliser it must undergo composting which entails the decomposition of sewage sludge under appropriate conditions of moisture, temperature, volatile solids content and in the presence of oxygen by microorganisms. This is quite lengthy and time consuming.

Other uses of the sludge have also been proposed such as that described in British Patent No. 2,256,862 (British Gas Plc) which teaches a method of producing concrete containing sewage sludge ash which is the waste by-product subsequent to incineration of the sewage. This sewage sludge ash is used as a substitute for more expensive aggregates and is found to have good bonding characteristics. However, this involves the expensive incineration step to produce the sewage sludge ash which further increases the total cost of producing the concrete and disposing of the wastewater sludge.

United States Patent Number 3,801,358 describes a method of making concrete using raw sewage and refuse. Once the concrete has cured, it is impregnated with a monomer and then heated or subjected to radiation to cause polymerisation. This will help to waterproof the concrete as well as improving sterilisation of the concrete. In order to facilitate impregnation of the monomer, the concrete block is placed in a vacuum and thereafter the concrete block is allowed to soak in the monomer for a period of time. This is a complex process that requires expensive equipment to produce the concrete blocks. Furthermore, each concrete block takes a significant period of time to make.

WO 90/15205 also describes a building element in which the main constituents comprise cement, waste sludge and fibre ingredients such as woodchip. In order to avoid direct contact with the building element, it is advised that the blocks should be plastered both inside and out. In order to stabilise a structure built with these building elements, regular concrete must be poured into the blocks cavity, the strength of the building element being relatively moderate. The applicant describes how the blocks are subjected to compression for a treatment period of 24 hours. Again, these blocks will take a significant period of time to make and require coating with a plaster to render the blocks suitable for contact.

Heretofore, there has not been provided a method of using wastewater sludge in the production of concrete that will provide a concrete that is ready to use that will not require covering the concrete with plaster or subjecting the concrete to radiation or other such treatment in order to render the concrete sufficiently sterile to use.

It is an object, therefore, of the present invention to provide a method of using wastewater sludge in the production of concrete that overcomes at least some of the problems mentioned above and that is inexpensive and satisfies the environmental requirements for disposal of wastewater sludge.

### Statements of Invention

According to the invention, there is provided a method of using wastewater sludge in the production of concrete comprising mixing cement, aggregate and wastewater sludge to form a concrete mix characterised in that:-
the additional step is carried out of mixing the wastewater sludge with an alkaline solution to achieve a wastewater sludge and alkaline solution mixture having a pH equal to or in excess of 11.5, prior to mixing with the aggregate and the cement.

By using this method, the invention obviates the need for expensive incineration steps and utilises untreated raw wastewater sludge in the concrete. The concrete can then be used as a building product and thus avoids the need for having to send the wastewater sludge to landfill. Furthermore, by adding an alkaline solution to the wastewater sludge, there is no need to provide further sterilisation steps such as subjecting the concrete to heating or radiation. The concrete provided will furthermore not have to be covered in plaster to render it safe. Therefore, both an environmentally friendly and economically efficient method is provided. Essentially there is provided a very simple invention. The previously known methods of using wastewater sludge in the production of concrete have required elaborate and often relatively expensive processes to render the concrete suitable for use. The problem of providing a concrete that is ready to use that will not pose a contamination risk is solved by the invention described above. Furthermore, the problem of having to provide expensive machinery and lengthy sanitising steps are obviated by the solution provided.

In one embodiment of the invention, the alkaline solution is a concrete hardener. It has been found that a concrete hardener may act as the alkaline solution and kill bacteria present in the concrete mixture. Furthermore, the concrete hardener will help to harden the concrete mixture in due course and will not have a detrimental effect on the quality of the concrete produced.

In another embodiment of the invention, the alkaline solution has a pH of between 12.5 and 14. Preferably, the alkaline solution has a pH of between 13.5 and 14. This will help to raise the pH level of the concrete mixture produced and will further improve the kill of bacteria in the wastewater sludge. The bacteria will be killed off in a very short period of time, thereby obviating the need for extensive storage times and further sterilisation techniques.

In a further embodiment of the invention, a bonding agent is added to the concrete mix. By adding a bonding agent to the concrete, there will be provided better adhesion of the component particles in the concrete. Preferably, the bonding agent used is carboxylated styrene butadiene alkali and will have a pH level in the region of 8 and 11. This will further help to improve the pH level of the concrete mixture.

In one embodiment of the invention, the wastewater sludge is in the form of dry sludge cake and water is added to the dry sludge cake, prior to the mixing of the sludge with the cement and the aggregate. By adding water to the wastewater sludge, the correct amount of water will be present to produce a uniform concrete each time, thereby ensuring good quality concrete each time.

In another embodiment of the invention, a polymer is added to the wastewater sludge. The polymer will further act as a bonding agent to the concrete providing improved adhesion properties to the concrete's components.

In a further embodiment of the invention, the concrete is stored for between 28 days and 6 months. By storing the concrete for a sufficient period of time, the concrete will be able to set which will further ensure that all bacteria are killed off and that the concrete adheres to health and safety standards.

In one embodiment of the invention, the aggregate comprises one or more of grey wacke stone, sand, sandstone, gravel, limestone, crushed shale, crushed seashells, pencil, kiln dried sand, grit, pulverised fuel ash, slag from steelworks, quicklime and recycled crushed concrete.

In a further embodiment of the invention there is provided a method of using wastewater sludge in the production of concrete in which additional cement is used instead of aggregate in the concrete mixture. This may in some instances be more economical than providing further aggregates whilst also providing a useable concrete mixture that contains a high content of wastewater sludge.

In another embodiment of the invention, a detergent is added to the concrete mix prior to curing. By providing the detergent, further bacterial kill may be achieved, again providing a concrete suitable for use in goods and products that conform to health and safety standards.

In a further embodiment of the invention, the alkali solution added to the wastewater sludge is Sika [Registered Trade Mark (RTM)]. This is seen as particularly useful as Sika is both inexpensive and effective in its function. The active ingredients of the strong alkali preferably include one or more of potassium hydroxide, sodium aluminate and potassium carbonate. Alternatively, instead of using Potassium Hydroxide to stabilise and sterilise the wastewater sludge, Sodium Hydroxide, Calcium Hydroxide or Barium Hydroxide could be used.

In one embodiment of the invention, the alkali solution is added to the wastewater sludge in the ratio of between 1:200 and 5:200 parts alkali solution to parts wastewater sludge. Preferably, the alkali solution is added to the wastewater sludge in the ratio of 3:200. These amounts are sufficient to see good bacterial kill in the final concrete mixture.

In another embodiment of the invention, the wastewater sludge, cement and aggregate are mixed in a ratio of 1:1:6 by weight to form the concrete mix. This is seen as a particularly efficient mix and will provide a robust concrete product suitable for most uses.

In a further embodiment of the invention, the blended concrete mix is sealed in a heavy duty plastic container. This will further prevent any leaching of the concrete and will minimise the risk of contamination to the environment from any harmful products remaining in the wastewater sludge and the concrete.

In one embodiment of the invention, there is provided a concrete product made in accordance with the method as described above. By having such a product, an inexpensive concrete product is provided, while also providing an alternative way of disposing of the wastewater sludge in a more environmentally friendly and cost efficient manner.

In another embodiment of the invention, the wastewater sludge comprises between 8% and 55% of the concrete mixture. Alternatively, the wastewater sludge may comprise between 11% and 14% of the concrete mixture. Preferably, the wastewater sludge will comprise 12% by weight of the concrete mixture. This allows for a large quantity of wastewater sludge to be incorporated into the concrete, while still maintaining all the strength properties necessary for the concrete to be used in construction.

### Detailed Description of the Invention

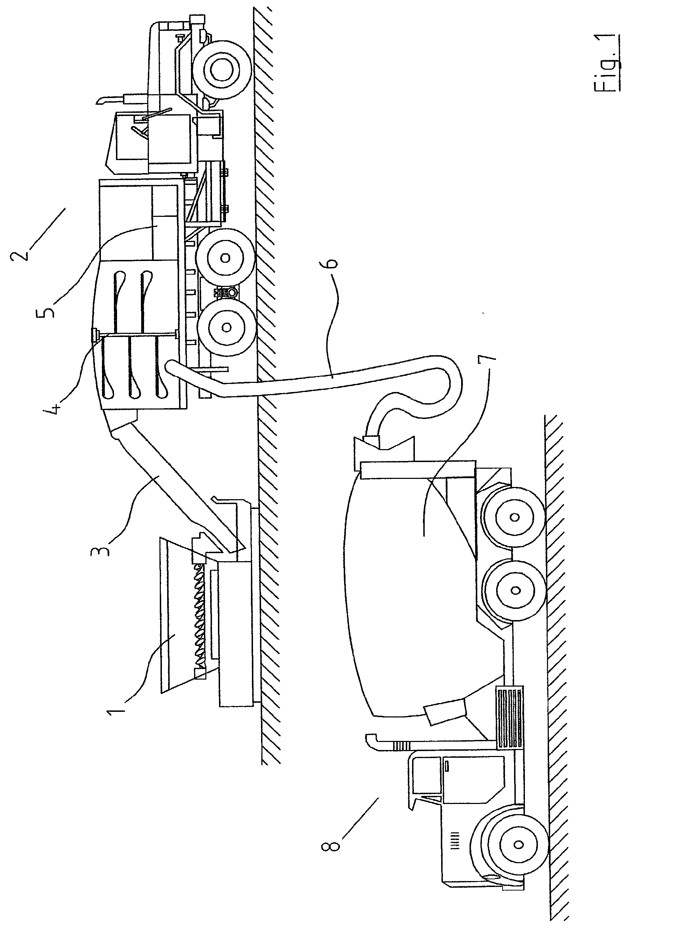

The invention will now be more clearly understood from the following description of some embodiments thereof, given by way of example only, with reference to the accompanying drawing in which there is shown a diagrammatic illustration of one form of suitable apparatus that may be used for carrying out the method of the invention.

Wastewater sludge is fed from a container 1 to a mixing truck 2 by way of a conveyor 3. The conveyor 3 has load cells (not shown) connected thereto to carefully monitor the amount of wastewater being delivered to the mixing truck 2. The wastewater is placed in a paddle mixer 4 of the mixing truck 2 wherein it is blended with an alkali solution. Once the wastewater and alkali solution have been mixed sufficiently, a pump 5 on the mixing truck 2 is actuated to pump the wastewater and alkali mixture through a flexible hose pipe 6 to a mixing drum 7 of a nearby concrete mixing truck 8. The mixing drum 7 has already contained therein a thoroughly blended mixture of cement and aggregate. Once the alkali solution and the wastewater have been added to the mixing drum 7 containing the aggregate and cement, the mixing drum 7 is rotated, thereby blending the materials contained therein to form a concrete mixture.

The relative amounts of wastewater sludge, cement and aggregate are determined, depending on the strength and curing time requirements of the individual producing the concrete. The alkali solution blended with the wastewater sludge can be a concrete hardener such as that sold under the brand name Sika (RTM). The alkali will further act as a hardener assisting in the curing time of the concrete mix once the wastewater sludge and the dry mix have been blended together. The wastewater sludge will be stabilised in that heavy elements such as phosphorus are physically stabilised within the matrix of the concrete and the sludge will also be sterilised in that the bacteria, viruses or other living organisms normally present in the sludge will be killed.

In addition to the strong alkali, a bonding agent such as those sold under the Registered Trade Marks EVOSTICK, RONAFIX, or Polyvinyl Acetate are further added to the wastewater sludge to improve the pH value of the concrete to be produced, whilst also improving the bonding properties of each of the main components of the concrete. This concrete mix may then be used to construct road side barriers, concrete verges, and the like.

A liquid detergent such as those produced by JEYES (RTM), DETTOL (RTM) or FLASH (RTM) is added to the unsolidified concrete mix to further eliminate any residual bacteria present in the wastewater sludge. The liquid detergent may be added to the concrete mix regardless of whether the alkali substances have been added. The concrete may then be poured into a heavy duty plastic container and sealed therein to avoid any risk of contamination to the environment by leeching of the concrete once it has been exposed to the elements.

Some examples of a concrete mixture produced in accordance with the invention will now be given.

### Example 1

1 Kg of wastewater sludge is mixed with 0.3 Kg of bonding agent in a suitable container. Once the bonding agent and wastewater sludge have been sufficiently mixed together, 0.3 Kg of concrete hardener is added to the mixture and stirred in thoroughly to assist in the hardening process, as well as killing any bacteria present in the mixture. Separately, 6 Kg of aggregate is mixed with 1 Kg of cement to form a dry mix. This dry mix is then mixed with the wastewater sludge, hardening agent and bonding agent and blended together until a concrete mixture is formed. This concrete mixture may then be used for road construction or other suitable purpose.

A sample of concrete made in accordance with the above example provided the following toxicity results for the main heavy metal contamination types, as shown in Table 1 below.

**TABLE 1**

| **Parameter** | **Max. Value in Sludge** | **Max. Value in Soil** | **Value Leached from Concrete** |
|---|---|---|---|
| Cadmium | 20 | 1 | 0.176 mg/Kg |
| Copper | 1000 | 50 | 0.846 mg/Kg |
| Nickel | 300 | 30 | 0.96 mg/Kg |
| Lead | 750 | 50 | 0.18 mg/Kg |
| Zinc | 2500 | 150 | 0.95 mg/Kg |
| Mercury | 16 | 1 | <0.025 mg/Kg |
| Chromium | | 3.5 kg/ha/yr | 1.66 mg/Kg |

Furthermore, various cube strength tests on random samples of the concrete were taken after hardening for 28 days. The measured strengths ranged from 3.0 to 6.0 N/mm² with an average of 4.5 N/mm². It will be understood that by having more concrete contained within the mix, the average cube strength test results of 7 or 8 N/mm² were attainable. This provides an aggregate impact value of less than 25% which is sufficient for use as heavy duty concrete floor finishes in most jurisdictions. Furthermore, the 10% fines value in excess of 130 KN is also easily attainable with careful selection of aggregate.

### Example 2

Five litres of Sodium Aluminate, five litres of Potassium Hydroxide and five litres of Potassium Carbonate are mixed together in a suitable mixing vessel. One ton of sludge cake at 15 to 20% dry solids is added to the mixed Sodium Aluminate, Potassium Hydroxide and Potassium Carbonate solution and blended with some aggregate until a viscous liquid is formed. Five litres of bonding agent and 5 to 10 litres of water are then added to the viscous liquid. Separately, six tons of aggregate is mixed with one ton of cement to form a dry mix that has the aggregate and cement evenly mixed throughout. The blended mixture containing the sludge cake is then added to the dry mix for a period of between five to ten minutes to form a concrete mixture. The concrete mixture is then ready to be poured. Similar toxicity results for the main heavy metal contamination types as shown for the previous example in Table 1 were achieved for the concrete mixture of Example 2.

It is envisaged that the mixing of the cement and aggregate could be performed in a standard concrete mixing truck or other such similar device. The sewage sludge could be added to the dry mix once any additional hardening agents or bonding agents had been thoroughly mixed in with the sewage sludge. The hardening and bonding agents could be pre-mixed with the sewage sludge in a separate mixing vessel before being pumped into the concrete mixing truck with the dry mix. It is envisaged that the hardening and bonding agents are mixed with the sewage sludge at between 500 and 1000 revolutions per minute to thoroughly mix the components together. Additional water may be added to the sewage sludge, if necessary, prior to mixing with any hardening or bonding agents.

It will be understood the aggregates used could be any one from a selection of crushed grey wacke stone, kiln dried sand, normal sand, gravel, grit, crushed sandstone, crushed pencil, crushed shale, crushed seashells, crushed concrete, pulverised fuel ash, quicklime or any other suitable type of stone. Slag from steel processing which is the silicate waste from steel blast furnaces could also be used as one alternative aggregate material. Reinforcing materials such as glass fibre or steel can also be added as part of the aggregate to further strengthen the concrete. The aggregates used will largely depend on the desired characteristics of the concrete to be produced. The concrete produced in accordance with the invention may itself be crushed subsequent to setting and thereafter may be used as a fill material for road surfaces.

The blended concrete mix could also be sealed in a heavy duty plastic container to prevent any risk of harmful materials being leached out of the concrete. As an alternative to a heavy duty plastic container a fibreglass coating or plastic coating may be applied to concrete produced in accordance with the method to add further protection and additional strength to the concrete.

In this specification, the term "hardening agent" has been used to define a substance that will reduce the time necessary for the concrete mixture to set. A concrete bonding agent is used to describe a substance that is used to enhance the cohesion of the individual ingredients, once mixed. In the examples described above it will be understood that various ingredients in the hardening agent act as stabilising and sanitizing components whereas various other ingredients act as hardening components. Potassium Carbonate or Aluminium Silicate would act as hardening components whereas Potassium Hydroxide would act as a stabilising and sanitising component. Other alkalines that could be substituted for the Potassium Hydroxide include Sodium Hydroxide, Calcium Hydroxide or Barium Hydroxide or other similar substances.

In this specification the terms "comprise, comprises, comprised and comprising" as well as the terms "include, includes, included and including" are deemed totally interchangeable and should be afforded the widest possible interpretation.

The invention is in no way limited to the embodiment hereinbefore described, but may be varied in both construction and detail within the scope of the claims.

## Claims

1. A method of using wastewater sludge in the production of concrete comprising mixing cement, aggregate and wastewater sludge to form a concrete mix **characterised in that**:-
the additional step is carried out of mixing the wastewater sludge with an alkaline solution to achieve a wastewater sludge and alkaline solution mixture having a pH equal to or in excess of 11.5, prior to mixing with the aggregate and the cement.

2. A method of using wastewater sludge in the production of concrete as claimed in claim 1, in which the alkaline solution is a concrete hardener.

3. A method of using wastewater sludge in the production of concrete as claimed in claim 1 or 2, in which the alkaline solution has a pH of between 12.5 and 14.

4. A method of using wastewater sludge in the production of concrete as claimed in claim 3, in which the alkaline solution has a pH of between 13.5 and 14.

5. A method of using wastewater sludge in the production of concrete as claimed in any preceding claim, in which a bonding agent is added to the concrete mix.

6. A method of using wastewater sludge in the production of concrete as claimed in claim 5, in which the bonding agent is carboxylated styrene butadiene alkali.

7. A method of using wastewater sludge in the production of concrete as claimed in claim 5 or 6, in which the bonding agent has a pH level of between 8 and 11.

8. A method of using wastewater sludge in the production of concrete as claimed in any preceding claim, in which the wastewater sludge is in the form of dry sludge cake and water is added to the dry sludge cake, prior to the mixing of the sludge with the cement and the aggregate.

9. A method of using wastewater sludge in the production of concrete as claimed in any preceding claim, in which a polymer is added to the wastewater sludge.

10. A method of using wastewater sludge in the production of concrete as claimed in any preceding claim, in which the concrete is stored for between 28 days and 6 months.

11. A method of using wastewater sludge in the production of concrete as claimed in any preceding claim, in which the aggregate comprises one or more of wacke stone, sand, sandstone, gravel, limestone, crushed shale, crushed seashells, pencil, quarried, kiln dried sand, grit, pulverised fuel ash, quicklime and recycled crushed concrete.

12. A method of using wastewater sludge in the production of concrete as claimed in any of claims 1 to 10 in which additional cement is used instead of aggregate in the concrete mixture.

13. A method of using wastewater sludge in the production of concrete as claimed in any preceding claim, in which a detergent is added to the concrete mix prior to curing.

14. A method of using wastewater sludge in the production of concrete as claimed in any preceding claim, in which the alkali solution added to the wastewater sludge is Sika.

15. A method of using wastewater sludge in the production of concrete as claimed in any preceding claim, in which the alkali solution is added to the wastewater sludge in the ratio of between 1:200 and 5:200 parts alkali solution to parts wastewater sludge.

16. A method of using wastewater sludge in the production of concrete as claimed in claim 15, in which the alkali solution is added to the wastewater sludge in the ratio of 3:200.

17. A method of using wastewater sludge in the production of concrete as claimed in any preceding claim, in which the wastewater sludge, cement and aggregate are mixed in a ratio of 1:1:6 by weight to form the concrete mix.

18. A method of using wastewater sludge in the production of concrete as claimed in any preceding claim, in which the blended concrete mix is sealed in a heavy duty plastic container.

19. A method of using wastewater sludge in the production of concrete as claimed in any preceding claim, in which the wastewater sludge comprises between 8% and 55% of the concrete mixture.

20. A method of using wastewater sludge in the production of concrete as claimed in claim 19, in which the wastewater sludge comprises between 11 % and 14% of the concrete mixture.

21. A method of using wastewater sludge in the production of concrete as claimed in claim 19 or 20, in which the wastewater sludge comprises 12% of the concrete mixture.

22. A concrete product made in accordance with the method steps of any of claims 1 to 21.
